# EUROPEAN PATENT SPECIFICATION

(11) **EP 2 889 976 B1**
(45) Date of publication and mention of the grant of the patent: **06.07.2016**
(21) Application number: 14197583.9
(22) Date of filing: 12.12.2014
(51) Int. Cl.: H02G 3/06

(54) **A trunking assembly**
Kabelbahnanordnung
Ensemble de canalisation de cables

(30) Priority: 12.12.2013 GB 201321978
(43) Date of publication of application: 01.07.2015
(73) Proprietor: Electrix International Limited, Bishop Auckland, County Durham DL14 6XP (GB)
(72) Inventor: Thompson, Malcolm, Bishop Auckland, Durham DL14 6XP (GB)
(74) Representative: Archer, Graham John

(56) References cited:
- EP-A1- 0 820 134

## Description

The present invention relates to trunking assembly, and relates particularly, but not exclusively, to a trunking assembly for use in the food, beverage or pharmaceutical industries.

The use of trunking is well known to carry and protect electrical cables as they are routed around a building. In some industries, for example the food, beverage and pharmaceutical preparation industries, cleanliness is of particular importance. As a result, trunking systems for use in these industries are typically made from stainless steel and are formed with as many smooth surfaces as possible attempting to avoid the creation of any potential dirt traps.

An example of such a trunking system is disclosed in European patent number EP0820134 and is shown in figure 1. This trunking assembly 10 includes a pair of trunking body sections 12 and 14 that are joined is using a connector portion 16. Each of the trunking body sections 12 and 14 as a pair of threaded studs that are indicated at 18 and 20 on the respective body sections. The connector 16 has pairs of slots 22 and 24 cut into either end of the side walls of the connector. When the trunking 10 is assembled the connector 16 is slid into the open ends of the trunking body sections 12 and 14 so that the slots 22 and 24 extend around the studs 18 and 20. Suitably sized nuts (not shown) are then threaded onto studs 18 and 20 and tightened so that the trunking body sections 12 and 14 are fixed together with their end edges abutting one another.

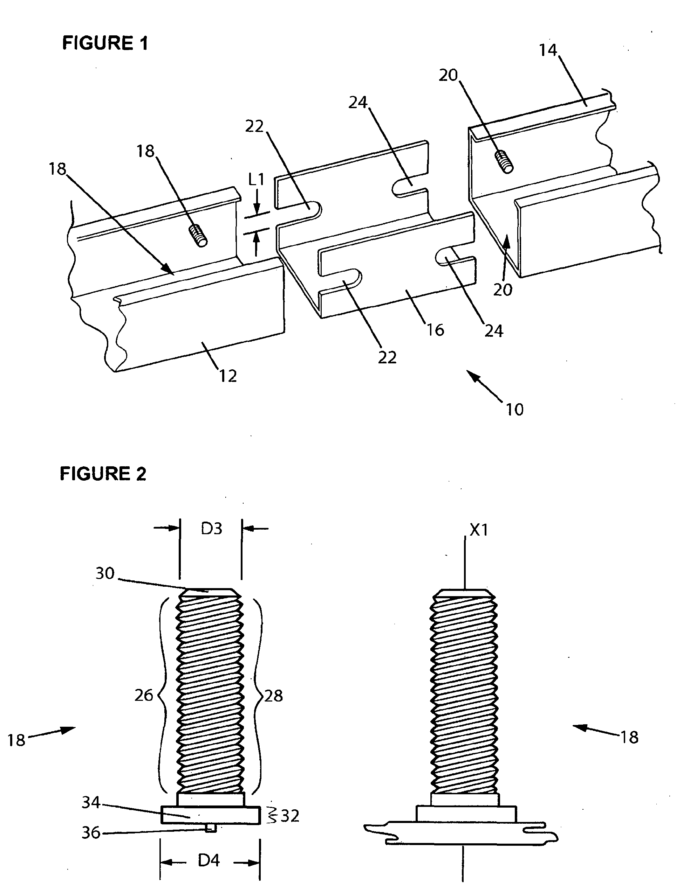

The studs 18 and 20 that are used are the well-known capacitive discharge studs and an example of such a stud is shown in figure 2. The stud 18 has a securing portion 26 including a threaded portion 28 which ends with a nut receiving end 30. At the other end of the stud 18 there is a fixing portion 32 includes flange 34 and an ignition tip 36. This type of stud is commonly used in stud welding machines and the flange 34 is used to ensure that the studs enter the machine with the correct alignment from a hopper that is filled with randomly aligned studs. To create the weld, the stud 18 is brought into engagement with the wall of trunking section 12 so that the ignition tip 34 engages that wall. Once in engagement a large electrical current is passed through the stud causing the tip, and part of the wall, to melt allowing the weld to be formed. A non-threaded example of such a stud is disclosed in US patent no US3182173.

When the trunking is in use it is important that the nuts are sufficiently tightened on to studs 18 and 20 to ensure that trunking body sections 12 and 14 are securely fixed together. However, tightening of the nut applies a pulling force to the welded junction. The slots 22 and 24 in connector 16 are sized to have sufficient room to allow them to easily receive studs 18 and 20. This space is required to allow sufficient play between the slots and the studs to accommodate the slight variations that occur during the manufacture of the components and to accommodate slight flexing the long lengths of the trunking body sections 12 and 14 during the installation process. The nuts are sufficiently large to engage the inside surfaces of the connector 16 and when the nuts are done up tightly the pulling force attempts to pull the threaded stud through the slots 22 and 24. This pulling force can cause a small indentation on the outer surface of the trunking sections 12 and 14 where the stud is fixed on the inner surface. This indentation is aesthetically undesirable and also causes a slight increase in the difficulty in cleaning the trunking sections. Furthermore, it is sometimes the case that during installation, in an attempt to ensure secure fixing of the components together, the nuts are over tightened onto the capacitive discharge stud. This application of excessive talk to the nuts adds to the indentation problem.

Preferred embodiments of the present invention seek to overcome the above described disadvantages of the prior art.

According to an aspect of the present invention there is provided a trunking assembly comprising:-
at least one trunking body portion formed from at least one sheet metallic material and having at least one securing stud fixed thereto at a fixing location, the stud having a securing portion having an external thread formed therein for receiving a securing nut thereon and a fixing portion adjacent said fixing location and including a non-threaded portion;
at least one connector for connecting a said trunking body to another said trunking body, said connector formed from at least one sheet metallic material and having at least one stud receiving portion formed therein;
at least one nut for securing said connector in engagement with said trunking body, the nut having at least one internal thread to engage said external thread of said stud; and
at least one support collar having an aperture formed therein, the aperture sized to allow the collar to pass along said securing portion and having a diameter of less than a largest dimension of said fixing portion of said stud measured transverse to an axis of said securing portion, wherein said support collar is located over said stud in engagement with said fixing portion and said connector is retained in engagement by fixing said connector between said nut and said support collar.

By providing a support collar for use with a stud that is able to pass over the threaded portion of the stud but is prevented from engaging the wall of the trunking body by being sized to not pass over the fixing portion (or flange), the following advantages are provided. The connector is clamped between the nut and the support collar and as a result the nut does not apply a pulling force on the connection between the stud and the wall of the trunking body. The nut can therefore be tightened onto the stud to any required tightness without causing an indentation in the external surface of the wall of the trunking body because the nut is not pulling the junction between the stud and the wall in the direction through the aperture in the connector. By removing any chance that the nut and stud can cause an indentation in the external surface of the wall of the body portion, this external surface is aesthetically more pleasing and does not contain the potential dirt traps caused by the indentation. Even if the installer applies an excessive tightening force on the nut, the stud does not cause an indentation on the external surface of the wall.

A further advantage of this arrangement is that the nut is not permanently applying a pulling force on the junction of the stud and the wall thereby reducing the likelihood that the weld that holds the stud to the wall could be damaged causing the disconnection of the stud from the trunking body.

The aperture may comprise an internal thread adapted to engage said threaded portion of said stud.

By having an internal thread on the collar the advantage is provided that the maximum surface area of the collar can engage the fixing portion (or flange) of the stud. This reduces the chances of the support collar not properly engaging the flange of the stud. It also ensures even engagement of the collar with the flange around the whole circumference of the flange. Furthermore, where the support collar is attached to the stud during the manufacture of the trunking body portion, the advantage is provided that the threading of the collar onto the stud can be used to test the secure fixing of the stud. The collar can be used to apply a torque to the stud that is close to or even in excess of the torque that is typically applied by the installer thereby ensuring that the stud is properly fixed to the wall.

In a preferred embodiment of the support collar is fixed in engagement with said stud.

By fixing the support collar during the manufacturing process, the advantage is provided that when trunking is being installed the installer does not have to remember to place the support collar onto the stud before attaching the connector. As a result, the manufacturer can ensure that the product is consistently installed irrespective of the installer undertaking the work.

In another preferred embodiment the stud is a threaded capacitive discharge stud.

Preferred embodiments of the present invention will now be described, by way of example only, and not in any limitative sense, with reference to the accompanying drawings in which:-
Figure 1 is a perspective view of a trunking assembly of the prior art;
Figure 2 is a side view of a capacitive discharge stud of the prior art and as used in the present invention, the stud is shown in the left-hand drawing on its own and in the right hand drawing fixed to a sheet material;
Figure 3 is an end view of a section of trunking body used in the present invention;
Figure 4 is a front view of a support collar used in the present invention;
Figure 5 is an end view of an assembly of the present invention including the section of trunking body of figure 3 together with the support collar of figure 4;
Figure 6 is an end view of the assembly of figure 4 further including a trunking connector; and
Figure 7 is an end view of the assembly of figure 5 including retaining nuts used to hold the assembly together.

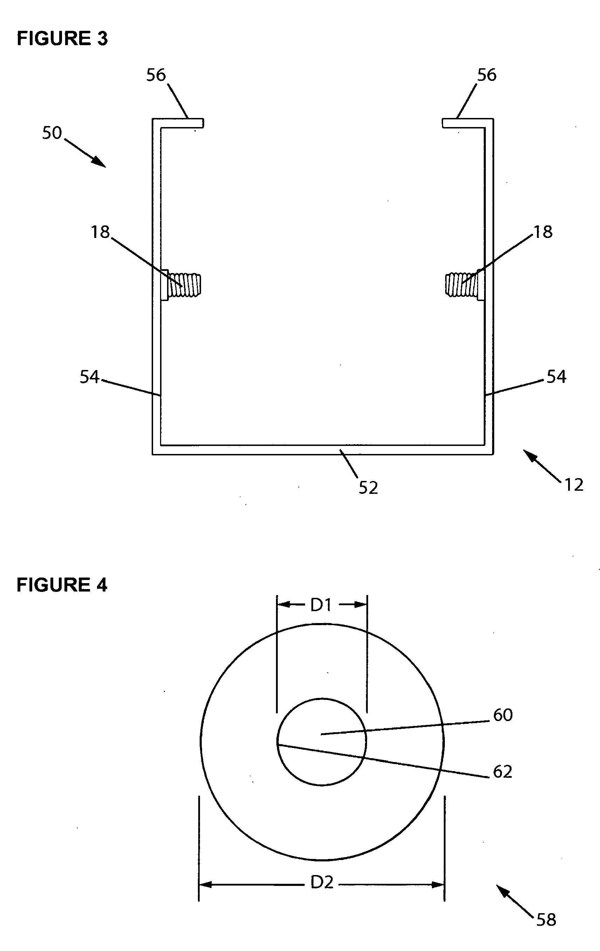

In figures 3 to 7 where components remain the same, or substantially the same, as those shown in prior art figures 1 and 2, the same reference numerals have been used. The trunking assembly 50 of the present invention has a trunking body portion 12 that is formed from one, although occasionally more than one, sheet of metallic material. The simplest trunking body portion 12 is a linear length which is formed by folding a sheet of metal with 4 parallel folds to form a floor 52, walls 54 and lips 56 that create an open channel along which electrical cables can be run. The open channel of the trunking body is generally enclosed by a lid (not shown), the lid being fixed to the trunking body 12 by any suitable means which may include a rotatable locking flange that engages the underside of lips 56.

Each trunking section has at least one stud, and generally pairs of studs 18, that are fixed to the inner surfaces of walls 54. The stud 18 is preferably a capacitive discharge stud that has a securing portion 26 including a threaded portion 28 which ends with a nut receiving end 30. At the other end of the stud 18 the fixing portion 32 includes a flange 34. This stud is attached using a capacitive discharge stud welding machine and the flange 34 is used to ensure that the studs enter the machine with the correct alignment from a hopper. To create the weld, the stud 18 is brought into engagement with the wall of trunking section 12 so that the ignition tip 36 (not shown in figures 3 to 6) engages the wall 54. Once in engagement a large electrical current is passed through the stud causing the tip, and part of the wall, to melt allowing the weld to be formed. The stud 18 shown in figures 3 and 5 to 7 does not have a threaded portion 28 and a non-threaded portion that together form the securing portion 26 as seen in the stud shown in figure 2. The presence of a non-threaded portion, having approximately the same cross-sectional diameter as the threaded portion together forming the securing portion, is not material to the present invention. It is simply important that there is a securing portion 26 and a fixing portion 32 that engages the wall 54 and has a flange 34 that is wider than the threaded portion.

The assembly 50 also includes support collars 58 that, in use, are attached to studs 18. The support collar 58 is, in one embodiment, similar in form to a washer. The support collar is formed as a disc of sheet metal material having an aperture 60 formed therein. The aperture 60 has an internal diameter D1 and the collar 58 has an external diameter D2. The threaded portion 28 of stud 18 has a cross-sectional diameter D3. The flange 34 of fixing portion 32 is substantially circular and has a diameter D4. The diameters D3 and D4 are measured at least transverse and preferably perpendicular to the axis X1 of stud 18. The slots 22 and 24 in connector portion 16 are sized such that the width of the slot as a measurement L1.

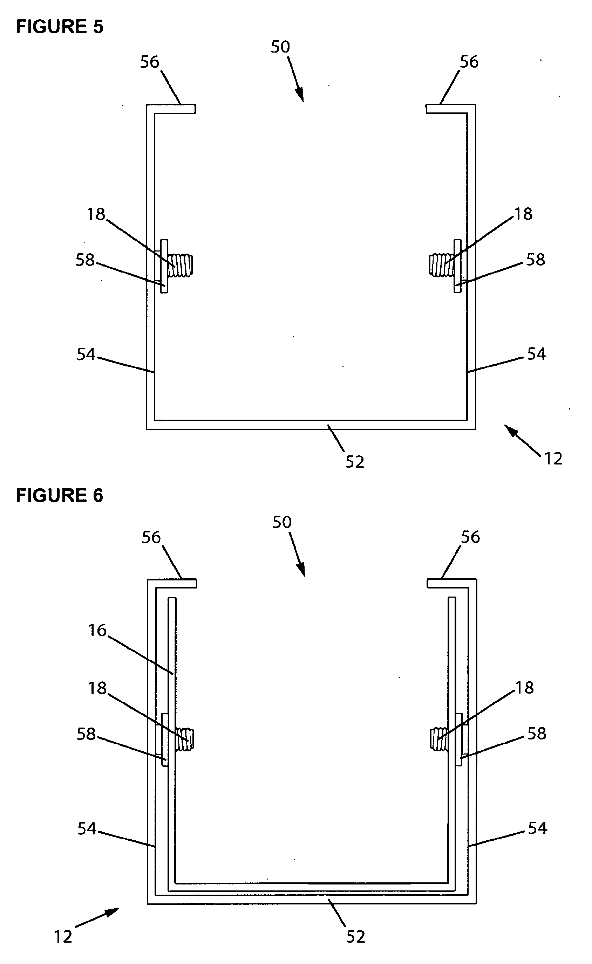

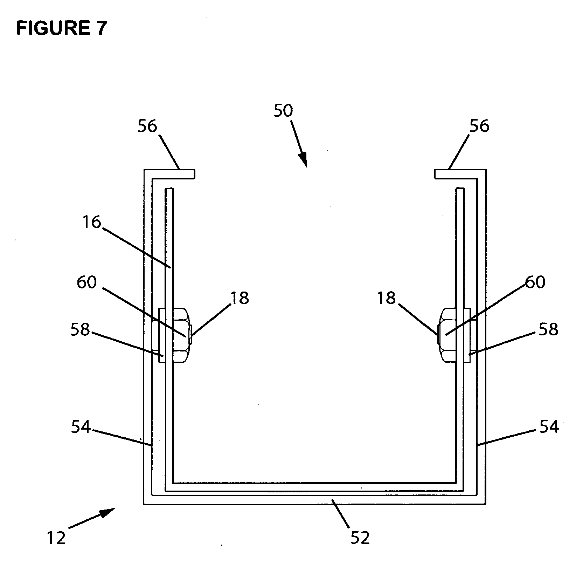

The purpose of the support collar 58 is to sit on the flange 34 and prevent the connector portion 16 from engaging wall 54. As a result, the internal diameter D1 of aperture 60 is greater than the external diameter D3 of the securing portion 26 and threaded portion 28 but is also less than the external diameter D4 of flange 34. Therefore, the support collar 58 is able to slide over the securing portion 26 of stud 18 but cannot pass over its flange 34. As seen in figure 5, the support collar 58 sits in engagement with flange 34 and does not come into contact with wall 54. The external diameter D2 of support collar 58 is sized to be larger than the width L1 of the slot 22 of the connector portion 16. Therefore, the support collar prevents the connector portion 16 from engaging the wall 54 of trunking body 12 adjacent the stud 18, as seen in figures 6 and 7.

When a nut 60 is threaded onto threaded portion 28 of stud 18 the connector portion 16 is clamped between the nut 60 and the support collar 58. Because of the presence of support collar 58 nut 60 can be tightened as much as is necessary and the force applied by nut 60 simply acts to press the connector portion into further engagement with support collar 58. The tightening and loosening of the nut 60 does not alter the force that is applied to the weld that connects stud 18 to wall 54. As a result, the tightening of nut 60 does not attempt to pull the stud through the slots 22 in connector portion 16 and therefore no indentation is made in the external surface of wall 54.

The trunking assembly 50 is assembled as follows. The trunking body portion 12 is preferably supplied as shown in figure 5 with the support collar 58 already attached to studs 18 and engaging flanges 34 thereof. It is also preferable that the support collar 58 is fixed in engagement with flange 34. This fixing may be by any suitable means including glueing or welding and simply prevents the support collar 58 from becoming disengaged from stud 18 during transportation. The connector portion 16 is then brought into engagement with studs 18 so that it engages support collars 58, as shown in figure 6. It is preferable that the walls of connector portion 16 are thicker than the thickness of flange 34 which defines the gap between wall 54 and support collar 58. If this is the case, the connector portion 16 is unable to be accidentally and incorrectly slotted between wall 54 and collar 58 as this would prevent nut 60 from applying any gripping force to the connector portion 16. Once the connector portion 16 is in place, nuts 60 are threaded onto studs 18 and tightened to apply clamping force between connector portion 16 and support collar 58, as shown in figure 7. Another trunking body 14 is brought into engagement with connector portion 16 in the same manner and once the trunking body portion is 12 and 14 of fixed together using connector portion 16 the lids (not shown) can be added and fixed thereto.

It will be appreciated by person skilled in the art that the above embodiments have been described by way of example only and not in any limitative sense, and that various alterations and modification are possible without departure from the scope of protection which is define by the appended claims. For example, in an alternative embodiment to the washer type support collar, the internal edge of aperture 62 may be threaded and sized to engage external threaded portion 28 of studs 18. This ensures the closest possible fit of the collar to the securing portion of the stud which in turn ensures that the support collar cannot slip over the flange of the stud. Furthermore, the external edge of the support collar does not need to be circular and could be square or hexagonal, or any other suitable shape, to assist in securing the internally threaded support collar onto the threaded portion. The shape of the flange of the stud does not matter but for standard capacitive discharge stud welding machines, the flange is circular and slightly larger in diameter than the diameter of the threaded portion.

## Claims

1. A trunking assembly comprising:-
at least one trunking body portion (12) formed from at least one sheet metallic material and having at least one securing stud (18) fixed thereto at a fixing location, the stud having a securing portion (26) having an external thread (28) formed therein for receiving a securing nut (60) thereon and a fixing portion (32) adjacent said fixing location and including a non-threaded portion;
at least one connector (16) for connecting a said trunking body (12) to another said trunking body (14), said connector formed from at least one sheet metallic material and having at least one stud receiving portion (22) formed therein;
at least one nut (60) for securing said connector in engagement with said trunking body, the nut having at least one internal thread to engage said external thread of said stud; and
**characterised by** at least one support collar (58) having an aperture formed therein the aperture sized to allow the collar to pass along said securing portion and having a diameter (D1) of less than a largest dimension (D4) of said fixing portion of said stud measured transverse to an axis of said securing portion, wherein said support collar is located over said stud in engagement with said fixing portion and said connector is retained in engagement by fixing said connector between said nut and said support collar.

2. An assembly according to claim 1, wherein said aperture comprises an internal thread adapted to engage said threaded portion (28) of said stud (18).

3. An assembly according to claim 1 or 2, wherein said support collar (58) is fixed in engagement with said stud (18).

4. An assembly according to any of the preceding claims, wherein said stud (18) is a threaded capacitive discharge stud.

## Patentansprüche

1. Baukastenanordnung, die Folgendes umfasst:
mindestens einen Baukastenkörperteil (12), der aus mindestens einem Blechmaterial hergestellt ist und mindestens einen Sicherungszapfen (18) aufweist, der an einer Fixierungsstelle daran fixiert ist, wobei der Zapfen einen Sicherungsteil (26) mit einem darin ausgebildeten Außengewinde (28) zum Aufnehmen einer Sicherungsmutter (60) darauf und einen Fixierungsteil (32) aufweist, der an die genannte Fixierungsstelle angrenzt und einen gewindelosen Teil beinhaltet;
mindestens ein Verbindungselement (16) zum Verbinden eines genannten Baukastenkörpers (12) mit einem anderen genannten Baukastenkörper (14), wobei das genannte Verbindungselement aus mindestens einem Blechmaterial hergestellt ist und mindestens einen darin ausgebildeten Zapfenaufnahmeteil (22) aufweist;
mindestens eine Mutter (60) zum Sichern des genannten Verbindungselements in Eingriff mit dem genannten Baukastenkörper, wobei die Mutter mindestens ein Innengewinde aufweist, um das genannte Außengewinde des genannten Zapfens in Eingriff zu nehmen; und
**gekennzeichnet durch** mindestens einen Stützkragen (58), der ein darin ausgebildete Öffnung aufweist, wobei die Öffnung so bemessen ist, dass sie dem Kragen ermöglicht, entlang dem genannten Sicherungsteil geführt zu werden, und einen Durchmesser (D1) aufweist, der kleiner als eine größte Abmessung (D4) des genannten Fixierungsteils des genannten Zapfens ist, gemessen quer zu einer Achse des genannten Sicherungsteils, wobei der genannte Stützkragen sich über dem genannten Zapfen in Eingriff mit dem genannten Fixierungsteil befindet und das genannte Verbindungselement **durch** Fixieren des genannten Verbindungselements zwischen der genannten Mutter und dem genannten Stützkragen in Eingriff gehalten wird.

2. Anordnung nach Anspruch 1, wobei die genannte Öffnung ein Innengewinde umfasst, das dazu eingerichtet ist, den genannten Gewindeteil (28) des genannten Zapfens (18) in Eingriff zu nehmen.

3. Anordnung nach Anspruch 1 oder 2, wobei der genannte Stützkragen (58) in Eingriff mit dem genannten Zapfen (18) fixiert wird.

4. Anordnung nach einem der vorhergehenden Ansprüche, wobei der genannte Zapfen (18) ein mit einem Gewinde versehener Zapfen für kapazitive Entladungen ist.

## Revendications

1. Un ensemble goulotte comprenant :
au moins une partie de corps de goulotte (12) formée par au moins une feuille d'un matériau métallique et ayant au moins un goujon de verrouillage (18) y étant fixé à un emplacement de fixation, le goujon ayant une partie de verrouillage (26) ayant un filetage extérieur (28) formé à l'intérieur pour y recevoir un écrou de verrouillage (60) et une partie de fixation (32) adjacente audit emplacement de fixation et incluant une partie non filetée ;
au moins un raccord (16) pour raccorder ledit corps de goulotte (12) à un autre dudit corps de goulotte (14), ledit raccord formé par au moins une feuille d'un matériau métallique et ayant au moins une partie de réception de goujon (22) formée à l'intérieur ;
au moins un écrou (60) pour verrouiller ledit raccord en se mettant en prise avec ledit corps de goulotte, l'écrou ayant au moins un filetage intérieur pour se mettre en prise avec ledit filetage extérieur dudit goujon ; et
**caractérisé en ce qu'**au moins un collier de support (58) ayant une ouverture formée à l'intérieur, l'ouverture étant dimensionnée pour permettre au collier de passer le long de ladite partie de verrouillage et ayant un diamètre (D1) inférieur à la dimension la plus grande (D4) de ladite partie de fixation dudit goujon, mesurée transversalement par rapport à un axe de ladite partie de verrouillage, dans lequel ledit collier de support est placé au-dessus dudit goujon en prise avec ladite partie de fixation et ledit raccord est retenu en prise en fixant ledit raccord entre ledit écrou et ledit collier de support.

2. Un ensemble selon la revendication 1, dans lequel ladite ouverture comprend un filetage intérieur adapté pour être en prise avec ladite partie filetée (28) dudit goujon (18).

3. Un ensemble selon la revendication 1 ou 2, dans lequel ledit collier de support (58) est fixé en prise avec ledit goujon (18).

4. Un ensemble selon l'une quelconque des revendications précédentes, dans lequel ledit goujon (18) est un goujon fileté de décharge capacitive.
